# EUROPÄISCHE PATENTSCHRIFT

(11) **EP 2 832 585 B1**
(45) Veröffentlichungstag und Bekanntmachung des Hinweises auf die Patenterteilung: **25.09.2019**
(21) Anmeldenummer: 14002397.9
(22) Anmeldetag: 11.07.2014
(51) Int. Cl.: B60P 1/44

(54) **Hubladebühne und Verfahren zur Steuerung derselben**
Raising loading platform and method for controlling the same
Hayon élévateur et son procédé de commande

(30) Priorität: 30.07.2013 DE 102013012598
(43) Veröffentlichungstag der Anmeldung: 04.02.2015
(73) Patentinhaber: Palfinger Tail Lifts GmbH, 27777 Ganderkesee (DE)
(72) Erfinder: Popken, Uwe, 26209 Hatten (DE)
(74) Vertreter: Möller, Friedrich

(56) Entgegenhaltungen:
- EP-A1- 2 620 322
- EP-A2- 2 487 066
- EP-A2- 2 520 460
- US-A1- 2010 241 320

## Beschreibung

Die Erfindung betrifft ein Verfahren zum Steuern einer Hubladebühne gemäß dem Oberbegriff des Anspruchs 1. Des Weiteren betrifft die Erfindung eine Hubladebühne gemäß dem Oberbegriff des Anspruchs 6.

Hubladebühnen der hier angesprochenen Art dienen zur Erleichterung des Be- und Entladens von Fahrzeugen. Dazu verfügt die Hubladebühne über eine heb-, senk- und schwenkbare Ladeplattform.

Während der Fahrt des die Hubladebühne aufweisenden Fahrzeugs ist die Ladeplattform angehoben und in eine vertikale Ruhestellung hochgeschwenkt. In der Regel befindet sich die Ladeplattform dann hinter der Rückwand des Fahrzeugaufbaus. In der Betriebsstellung zum Be- und Entladen des Fahrzeugs wird die Ladeplattform heruntergeschwenkt in eine horizontale oder nahezu horizontale Betriebsstellung. Durch ein Anheben und Absenken der so heruntergeklappten Ladeplattform können Gegenstände auf das Niveau der Ladefläche des Fahrzeugs oder ein demgegenüber niedriges Niveau, beispielsweise ein Bodenniveau, gebracht werden. Umgekehrt wird die Ladeplattform zum Beladen des Fahrzeugs angehoben.

Die Ladeplattform ist von der Seite gesehen keilförmig ausgebildet zur Bildung einer spitzen hinteren Querkante. Dadurch weicht die beispielsweise auf den Boden abgesenkte Ladeplattform üblicherweise vom Bodenverlauf ab. Um das auszugleichen, wird die Ladeplattform nach dem Absenken auf den Boden nochmals derart verschwenkt, dass sie mit der spitzen hinteren Querkante auf dem Boden aufliegt. Im Fachjargon wird dieses als "Bodenangleichung" bezeichnet. Vor dem Anheben der Ladeplattform wird die Bodenangleichung zunächst durch geringfügiges Hochschwenken der Ladeplattform wieder ausgeglichen, damit ihre obere Nutzfläche wieder horizontal oder nahezu horizontal verläuft.

Bei bekannten Hubladebühnen wird die Bodenangleichung mechanisch und/oder hydraulisch durchgeführt. Das erfordert einen erheblichen apparativen Zusatzaufwand. Außerdem hat sich bei bekannten Hubladebühnen die bedarfsgerechte Ausrichtung der Ladeplattform vor dem Absenken und auch Anheben als schwierig erwiesen. Diese Position muss von der Bedienungsperson jedes Mal durch entsprechende Betätigung der Betätigungsorgane angefahren werden. Das erfordert auch bei einer geübten Bedienungsperson einige Zeit. Es kann auch vorkommen, dass die Neigung während des Hub- und Senkvorgangs verändert werden muss, was eine zeitaufwendige Unterbrechung des Hub- oder Senkvorgangs der Ladeplattform zur Folge hat.

Aus der gattungsgemäßen EP 2 487 066 A2 ist ein Verfahren zum Steuern einer Hubladebühne bekannt, bei der die Bodenangleichung unter Zuhilfenahme eines Winkelgebers erfolgt.

Die US 2010/0241320 A1 offenbart ein Verfahren zum Steuern einer Hubladebühne mit einer Vielzahl unterschiedlicher Sensoren. Unter anderem sind Beschleunigungssensoren zur Ermittlung von Bewegungsgeschwindigkeiten der Ladeplattform vorgesehen.

Ausgehend vom Vorstehenden liegt der Erfindung die Aufgabe zugrunde, eine Hubladebühne und ein Verfahren zur Steuerung derselben zu schaffen, die eine einfache und sichere Bedienung gewährleisten.

Ein Verfahren zur Lösung dieser Aufgabe weist die Maßnahmen des Anspruchs 1 auf. Demnach ist es vorgesehen, sowohl den Schwenkwinkel der Ladeplattform als auch dynamische Werte beim Bewegen der Plattform zu ermitteln, um mindestens einen Teil dieser Werte für wenigstens einen nachfolgenden Bewegungsablauf der Ladeplattform heranzuziehen. Aufgrund der ermittelten dynamischen Werte lässt sich feststellen, ob die Ladeplattform momentan angehoben oder abgesenkt wird und/oder die Ladeplattform eine Schwenkbewegung vollführt. Durch die zusätzliche Erfassung des Schwenkwinkels lässt sich der jeweilige, momentane Schwenkzustand der Ladeplattform ermitteln, beispielsweise ob die Ladeplattform hochgeschwenkt ist, ob sie in eine zum Beladen geeignete Position heruntergeschwenkt ist oder ob eine Bodenangleich stattgefunden hat. Aufgrund der dynamischen Werte und des Schwenkwinkels erhalten der Bediener oder eine Steuerung der Hubladebühne alle Werte, die notwendig sind, um mindestens einen nachfolgenden Bewegungsablauf zu steuern, zu überwachen und/oder einzuleiten oder sonstige Bewegungen der Ladeplattform zu beeinflussen. Das Verfahrens sieht es außerdem vor, anhand der ermittelten dynamischen Werte festzustellen, ob und wann die Ladeplattform vollständig abgesenkt und/oder vollständig angehoben ist. Signalisiert wird das durch unveränderte dynamische Werte oder dynamische Werte, die gleich "null" sind. Durch das so detektierte vollständige Absenken der Ladeplattform kann die Bodenangleichung eingeleitet werden, ohne dass dazu spezielle mechanische oder hydraulische Einrichtungen erforderlich sind. Die Detektion der vollständig angehobenen Ladeplattform ist wichtig, weil dann gefahrlos Gegenstände vom Laderaum des Fahrzeugs auf die Ladeplattform oder umgekehrt überführbar sind, insbesondere wenn dieses üblicherweise mit Hubwagen erfolgt.

Bevorzugt ist es vorgesehen, dass mindestens die dynamischen Werte, vorzugsweise die dynamischen Werte und die Werte für den jeweiligen Schwenkwinkel, gespeichert werden, insbesondere fortlaufend. Es erfolgt dadurch eine bevorzugt lückenlose Aufzeichnung aller Bewegungen der Hubladebühne, und zwar mindestens der Ladeplattform. Außerdem stehen der Steuerung der Hubladebühne alle Werte (Daten und/oder Signale) zur Verfügung, die erforderlich sind, um beispielsweise mindestens einen nächsten Bewegungsablauf zum richtigen Zeitpunkt einzuleiten.

Nach einer vorteilhaften Ausgestaltung des Verfahrens wird anhand wenigstens eines ermittelten dynamischen Werts zumindest erfasst, ob eine Senk- bzw. Hubbewegung der Ladeplattform beendet, gestartet und/oder unterbrochen wird. So kann anhand eines entsprechenden dynamischen Werts festgestellt werden, ob die Ladeplattform auf den Boden abgesenkt ist, bzw. auf dem Boden aufliegt und daraufhin die Bodenangleichung gestartet werden kann, ob die Ladeplattform angehoben ist, vor allem ausreichend angehoben ist und/oder das Heben bzw. Senken der Ladeplattform aus einem unvorhergesehenen Grund unterbrochen wurde. So kann zum Beispiel die Bodenangleichung zum richtigen Zeitpunkt gestartet oder rückgängig gemacht werden. Außerdem findet eine vorzugsweise lückenlose Überwachung der Bewegungsabläufe der Hubladebühne, insbesondere der Ladeplattform, statt. Infolge der momentanen Stellung der Ladeplattform unzulässige Befehle können durch eine entsprechende Steuerung automatisch blockiert werden, so dass die Bedienungsperson keine solchen Bewegungsabläufe einleiten kann, die aufgrund der momentanen Stellung der Ladeplattform unzulässig sind oder gar zu Schäden führen können.

Besonders bevorzugt ist es, wenn das der Erfindung zugrundeliegende Verfahren ausgebildet ist, um anhand mindestens eines dynamischen Werts, der das vollständige Absenken der Ladeplattform detektiert, die Bodenangleichung einzuleiten bzw. zu starten. Insbesondere wird die Bodenangleichung auch automatisch beendet, was ebenfalls in Abhängigkeit eines hierfür charakteristischen dynamischen Werts oder alternativ bzw. zusätzlich auch durch den Schwenkwinkelwert erfolgen kann.

Gemäß einer weiteren vorteilhaften Ausgestaltung der Erfindung werden als dynamische Werte mindestens Beschleunigungs- und/oder Verzögerungswerte der Ladeplattform ermittelt, vorzugsweise sensorisch. Solche Beschleunigungs- oder Verzögerungswerte (negative Beschleunigungen) oder auch Gravitationswerte ändern sich bei der Einleitung einer Bewegung, bei der Beendigung einer Bewegung und auch bei Änderungen der Geschwindigkeit, beispielsweise der Hub- oder Senkgeschwindigkeit. Vor allem im Zusammenhang mit zusätzlich aufgenommenen Winkelwerten ermöglichen die auch erfassten Beschleunigungs- oder Gravitationswerte Rückschlüsse auf das gesamte Bewegungsverhalten der Ladeplattform und ihren momentanen Schwenkwinkel. Daraus lassen sich alle oder zumindest einige Bewegungsabläufe der Hubladebühne, insbesondere der Hub-, Senk-, Schwenk- und Bodenangleichungsvorgang, automatisch durchführen und/oder manuell vorgenommene Betätigungsvorgänge der Hubladebühne überwachen.

Eine Hubladebühne zur Lösung der eingangs genannten Aufgabe weist die Merkmale des Anspruchs 6 auf. Demnach ist zusätzlich zum mindestens einen Neigungssensor auch noch wenigstens ein Beschleunigungssensor vorgesehen. Der mindestens eine Beschleunigungssensor ist der Ladeplattform zugeordnet. Er kann außen an der Ladeplattform befestigt sein, beispielsweise an einer Seitenwand. Es ist aber auch eine Anbringung des oder jedes Beschleunigungssensors im Inneren der Ladeplattform denkbar. Mit beiden Sensoren zusammen lassen sich der momentane Schwenkwinkel der Ladeplattform und das Bewegungsverhalten derselben (Geschwindigkeitsänderungen, Bewegungsunterbrechungen oder Stillstände) ermitteln. Daraus können alle zum automatischen oder manuellen Betrieb der Hubladebühne wichtigen Informationen ermittelt werden. Bewegungsabläufe der Hubladebühne können automatisch gestoppt oder gestartet werden und es kann alternativ oder zusätzlich eine automatische Überwachung der Bedienung der Hubladebühne erfolgen. Durch die Anbringung des Beschleunigungssensors an oder in der Ladeplattform macht der Beschleunigungssensor die Bewegungen derselben, insbesondere positive oder negative Beschleunigungen, mit und erzeugt dadurch ein sich mit der Größe der Beschleunigung, und vorzugsweise auch der Richtung, proportionales Signal. Führt die Ladeplattform keine Bewegungen aus, ist dieses Signal gleich "null", und somit ein eindeutiger Hinweis auf einen momentanen Ruhezustand der Ladeplattform. Aus der Richtung der Beschleunigung und/oder aus der positiven oder negativen Beschleunigung kann abgeleitet werden, welche Bewegungen die Ladeplattform derzeit vollführt.

Eine vorteilhafte Weiterbildung der Ladeplattform sieht es vor, den mindestens einen Beschleunigungssensor und den mindestens einen Neigungssensor zu einem Sensorpaket oder einer Sensoreinheit zusammenzufassen und dieses bzw. diese vorzugsweise der Ladeplattform zuzuordnen. Weil die verwendeten Sensoren sehr klein sind, lassen sie sich auch zu einem relativ kleinen Sensorpaket zusammenfassen, das als Ganzes an der Ladeplattform oder gegebenenfalls auch anderen Teilen der Hubladebühne befestigbar ist. Es braucht dann auch nur eine Sammelleitung vom Sensorpaket zur Steuerung, einer Bedieneinheit, einem Mikroprozessor, einer Auswerteinheit und/oder einem Speicher geführt zu werden. Das alles vereinfacht den Montageaufwand und ermöglicht auch rasche Reparaturen.

Der mindestens eine Beschleunigungssensor und/oder der wenigstens eine Neigungssensor sind mindestens mit der Bedieneinheit, einer Steuerung und/oder einer Auswerteinheit verknüpft. Dadurch können die vom Beschleunigungssensor und/oder Neigungssensor stammenden Signale gegebenenfalls nach einer Aufbereitung in der Steuerung verwendet werden zu von der Steuerung generierten automatischen Bedienbefehlen der Hubladebühne und/oder zur Kontrolle insbesondere manueller Bedienungsbefehle.

Vorzugsweise ist es vorgesehen, der Auswerteinheit bzw. der Steuerung mindestens einen Speicher zuzuordnen, der die vom mindestens einen Neigungssensor und/oder Beschleunigungssensor generierten Signale bevorzugt fortlaufend abspeichert, so dass im Speicher eine Bewegungshistorie der Hubladebühne, insbesondere der Ladeplattform, hinterlegt ist, die zu vielfältigen Zwecken heranziehbar und/oder auswertbar ist.

Ein bevorzugtes Ausführungsbeispiel der Erfindung wird nachfolgend anhand der Zeichnung näher erläutert. In dieser zeigen:
- Fig. 1: eine an einem teilweise dargestellten Fahrzeugaufbau angebaute Hubladebühne in einer Ruhestellung,
- Fig. 2: die Hubladebühne in einer Darstellung gemäß der Fig. 1 mit in eine Betriebsstellung heruntergeschwenkter Ladeplattform,
- Fig. 3: die Hubladebühne der Fig. 1 und 2 bei abgesenkter Ladeplattform, und
- Fig. 4: die Hubladebühne der Fig. 3 nach einer Bodenangleichung.

Die hier dargestellte Hubladebühne 10 ist an einer Rückseite eines Fahrzeugaufbaus 11 eines teilweise dargestellten Fahrzeugs angeordnet. Die Hubladebühne 10 verfügt über eine ebene Ladeplattform 12, die über ein Hubwerk 13 heb-, senk- und schwenkbar an einem quer zur Fahrtrichtung am Chassis des Fahrzeugs montierten Tragrohr 14 angelenkt ist. Das Hubwerk 13 verfügt über Druckmittelzylinder 15 und 16 zum Schwenken bzw. Heben und Senken der Ladeplattform 12. Alternativ ist es denkbar, statt der Druckmittelzylinder 15 und 16 elektromotorisch betriebene Linearantriebe zum Heben, Senken bzw. Verschwenken der Ladeplattform 12 einzusetzen.

Zur Betätigung des Schwenk-, Hebe- und Senkvorgangs der Ladeplattform 12 ist ein Bedienpult 17 vorgesehen. Dieses verfügt über entsprechende Bedienschalter, die von einer Bedienungsperson manuell betätigbar sind, wodurch die Ladeplattform 12 individuell verschwenkbar, heb- oder senkbar ist.

Erfindungsgemäß sind der Hubladebühne 10 mehrere Sensoren zugeordnet, und zwar zumindest ein Neigungssensor 18 und wenigstens ein Beschleunigungssensor 19. Im gezeigten Ausführungsbeispiel sind der Neigungssensor 18 und der Beschleunigungssensor 19 zur gemeinsamen Sensoranordnung zusammengefasst. Beim Neigungssensor 18 und beim Beschleunigungssensor 19 kann es sich um Mikrosensoren handeln, die aufgrund ihrer geringen Größe an beliebigen Stellen der Hubladebühne 10 anbringbar sind. Im hier gezeigten, bevorzugten Ausführungsbeispiel der Erfindung sind der Neigungssensor 18 und der Beschleunigungssensor 19 an der Ladeplattform 12 befestigt. Der Neigungssensor 18 und der Beschleunigungssensor 19 können an beliebigen Stellen der Ladeplattform 12 befestigt sein. Bevorzugt sind der Neigungssensor 18 und der Beschleunigungssensor 19 an einer geschützten Stelle angeordnet, wo keine Gefahr der Beschädigung durch auf der Ladeplattform 12 transportierte Gegenstände besteht. Im gezeigten Ausführungsbeispiel sind der Beschleunigungssensor 19 und der Neigungssensor 18 an einer aufrechten, in Fahrtrichtung des Fahrzeugs verlaufenden Seitenwandung der Ladeplattform 12 befestigt, beispielsweise in einer dafür vorgesehenen (in den Figuren nicht dargestellten) Nische zum Schutz des Neigungssensors 18 und des Beschleunigungssensors 19. Denkbar ist es auch, den Neigungssensor 18 und/ oder den Beschleunigungssensor 19 im Inneren der Ladeplattform 12 unterzubringen.

Der mindestens eine Neigungssensor 18 liefert ein elektrisches Signal, das neigungsabhängig ist. Dieses Signal verändert sich folglich mit der Neigung bzw. Schrägstellung der Ladeplattform 12 gegenüber der Horizontalen.

Der wenigstens eine Beschleunigungssensor 19 erfasst dynamische Werte und gibt entsprechende elektrische Signale ab, die sich mit zunehmender und abnehmender Beschleunigung ändern. Das Signal ändert sich auch, wenn die Ladeplattform negativ beschleunigt, das heißt verzögert, wird. Gegebenenfalls kann dabei der Neigungssensor 18 ein negatives Signal abgeben. Die Beschleunigungs- bzw. Verzögerungswerte (negative Beschleunigung), die von mindestens einem Neigungssensor 18 aufgenommen werden, beziehen sich auf die Ladeplattform 12. Erfährt die Ladeplattform 12 keine Beschleunigung oder Verzögerung, detektiert das der mindestens eine Neigungssensor 18 durch ein entsprechendes elektrisches Signal, beispielsweise kann dieses dann Null sein.

Sowohl der Neigungssensor 18 als auch der Beschleunigungssensor 19 sind so ausgebildet, dass sie kontinuierlich elektrische Signale abgeben, und zwar unterschiedliche Signale, bezogen auf die Neigung der Ladeplattform 12, die Beschleunigung bzw. Verzögerung der Ladeplattform 12 oder einen Stillstand der Ladeplattform 12.

Der mindestens eine Neigungssensor 18 und der Beschleunigungssensor 19 sind durch geeignete Datenleitungen oder gegebenenfalls auch drahtlos mit einer nicht gezeigten Schaltung und/oder Steuerung verbunden. Hierbei handelt es sich vorzugsweise um einen Mikroprozessor (CPU). Dieser dient sowohl zur Speicherung als auch zur Auswertung der elektrischen Signale des mindestens einen Beschleunigungssensors 19 und des Neigungssensors 18.

Nachfolgend wird das erfindungsgemäße Verfahren anhand der zuvor beschriebenen Hubladebühne 10 näher erläutert:
Gemäß dem erfindungsgemäßen Verfahren werden mit mindestens einem Neigungssensor 18 und mindestens einem Beschleunigungssensor 19 Bewegungen der Ladeplattform 12 der Hubladebühne 10 erfasst, und zwar bevorzugt kontinuierlich. Daraufhin stehen Informationen zur Verfügung, die eine automatische oder semi-automatische Einleitung nachfolgender Bewegungsabläufe ermöglichen oder zur Überwachung der von der Bedienungsperson manuell vorgenommenen Schaltbefehle herangezogen werden können.

Es ist bevorzugt vorgesehen, die vom Neigungssensor 18 und dem Beschleunigungssensor 19 gelieferten Signale oder Daten fortlaufend abzuspeichern. Dadurch können auch Bewegungsabläufe der Hubladebühne 10, insbesondere der Ladeplattform 12, lückenlos dokumentiert werden.

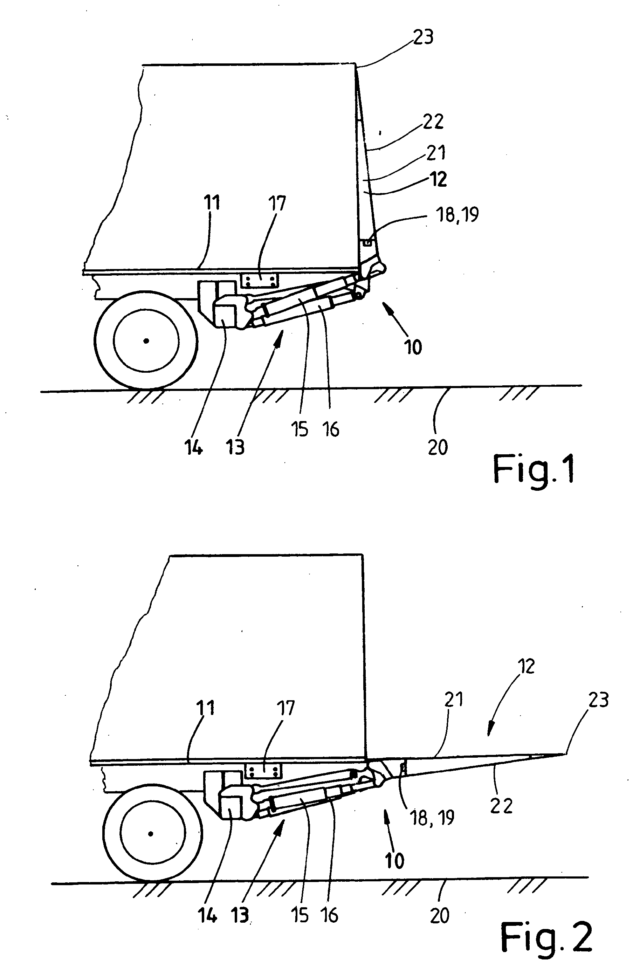

Vom mindestens einen Neigungssensor 18 ist die Ausrichtung bzw. Neigung der Ladeplattform 12, vorzugsweise ihrer oberen Nutzfläche 21, feststellbar. Der Neigungssensor 18 kann ermitteln, ob die Ladeplattform 12 in die Ruhestellung hochgeschwenkt ist (Fig. 1), ob sie sich in der heruntergeschwenkten Betriebsstellung befindet (Fig. 2 bis 4) oder ob in der Betriebsstellung sich die Nutzfläche 21 der Ladeplattform 12 horizontal oder in einer leicht zur Horizontalen verlaufenden schrägen Stellung befindet, in der ein Be- und Entladen der Ladeplattform 12 mit den von dieser anzuhebenden bzw. abzusenkenden Gegenständen möglich ist.

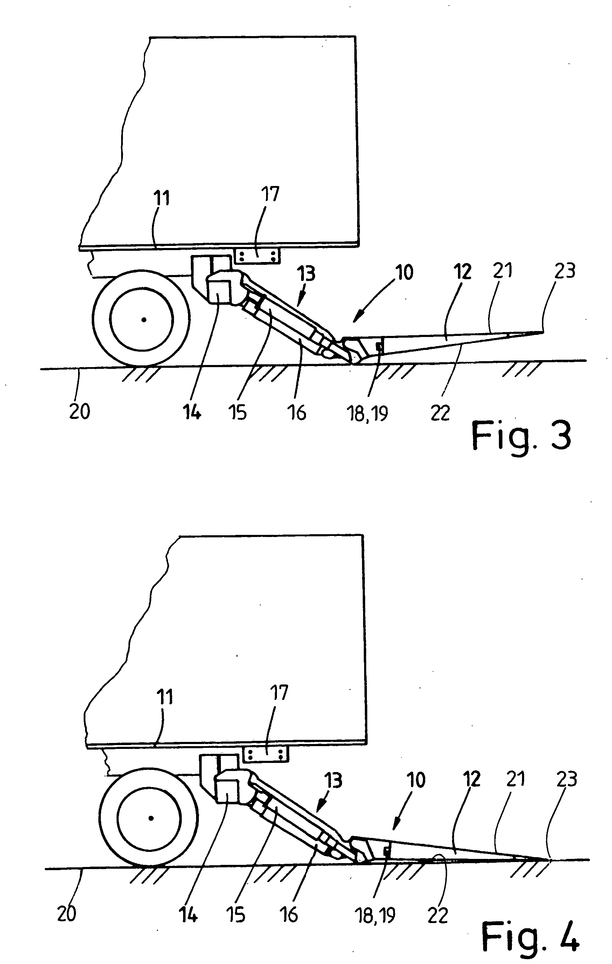

Die hier gezeigte Ladeplattform 12 ist quer zur Fahrtrichtung des Fahrzeugs gesehen keilförmig ausgebildet. Die der oberen Nutzfläche 21 gegenüberliegende Unterseite 22 der Ladeplattform 12 verläuft unter einem spitzen Winkel zur Nutzfläche 21. Zu einer hinteren Querkante 23 laufen die Nutzfläche 21 und die Unterseite 22 zusammen. Infolge der keilförmigen Ausgestaltung der Ladeplattform 12 ist es erforderlich, nach dem vollständigen Absenken derselben auf den Boden 20 (Fig. 3) die Ladeplattform 12 herunterzuschwenken, damit auch die hintere Querkante 23 auf dem Boden 20 anliegt (Fig. 4). Hierbei handelt es sich um die sogenannte Bodenangleichung. Auch umgekehrt muss beim Anheben der Ladeplattform 12 zunächst die Bodenangleichung rückgängig gemacht werden, indem die Ladeplattform 12 etwas hochgeschwenkt wird, wodurch sich die hintere Querkante 23 vom Boden 20 beabstandet und die obere Nutzfläche 21 wieder etwa horizontal oder leicht ansteigend ausgerichtet ist (Fig. 3).

Bei der hier gezeigten keilförmigen Ladeplattform 12 dient zur Steuerung, nämlich Auslösung und Beendigung der Bodenangleichung, und auch zur Überwachung des Vorgangs der Bodenangleichung und der Rückgängigmachung derselben in erster Linie der mindestens eine Beschleunigungssensor 19. Wenn die Ladeplattform 12 gemäß der Fig. 3 auf den Boden 20 abgesenkt ist, nämlich auf dem Boden 20 anschlägt, führt das zu einer negativen Beschleunigung, das heißt einer Verzögerung, die vom Beschleunigungssensor 19 erfasst wird. Der mindestens eine Beschleunigungssensor 19 gibt dann ein Signal an die Steuerung, die daraufhin automatisch eine Bodenangleichung durchführen kann, indem die Ladeplattform 12 verschwenkt wird, und zwar im gezeigten Ausführungsbeispiel (Fig. 3 und 4) im Uhrzeigersinn. Wenn die Bodenangleichung abgeschlossen ist, indem die hintere Querkante 23 auf den Boden 20 auftrifft, stellt der mindestens eine Beschleunigungssensor 19 wiederum eine negative Beschleunigung (Verzögerung) fest, so dass vom Beschleunigungssensor 19 die Steuerung ein Signal zur Beendigung der Bodenangleichung erhält. Umgekehrt wird die Bodenangleichung rückgängig gemacht, wobei unter Zuhilfenahme des Neigungssensors 18 die Ladeplattform 15 soweit gegen den Uhrzeigersinn verschwenkt wird, bis die hintere Querkante 23 vom Boden 20 abgehoben und die Ladeplattform 12 so ausgerichtet ist, dass mit ihr Gegenstände angehoben werden können. Die Rückgängigmachung der Bodenangleichung, also der Winkel, um den die Ladeplattform 12 hochgeschwenkt wird, wird vom Neigungssensor 18 überwacht, indem automatisch diejenige Schwenkposition der Ladeplattform 12 wieder angefahren wird, die die Ladeplattform vor der Bodenangleichung aufwies, nämlich die Schwenkstellung der Fig. 3.

Die fortlaufend von mindestens einem Beschleunigungssensor 19 gelieferten Signale können allein oder gegebenenfalls in Verbindung mit den Signalen des mindestens einen Neigungssensors 18 auch zu anderen Steuerungszwecken der Hubladebühne 10, insbesondere das Anheben, Absenken und Verschwenken der Ladeplattform 12, verwendet werden. So kann vom Beschleunigungssensor 19 erfasst werden, wenn die Ladeplattform 12 ihre maximal angehobene Stellung (Fig. 2) erreicht hat. Die Ladeplattform 12 schlägt dann unter und/oder hinter der Ladefläche des Fahrzeugaufbaus 11 an, was wiederum zu einer vom mindestens einen Beschleunigungssensor 19 detektierten Verzögerung der Ladeplattform 12 führt. Das ist ein charakteristisches Signal für die Steuerung, den Hebevorgang der Ladeplattform 12 zu beenden. Falls gewünscht, kann anschließend die hochschwenkende Ladeplattform 12 in die Ruhestellung der Fig. 1 gebracht werden. Sobald die hintere Querkante 23 an dieser spitz auslaufenden Ladeplattform 12 hinter dem Fahrzeugaufbau 11 anschlägt, wird das wiederum vom Beschleunigungssensor 19 detektiert, der dann das Hochschwenken der Ladeplattform 12 in die Ruhestellung (auch Schließstellung genannt) beendet.

Die vom mindestens einen Beschleunigungssensor 19 ermittelten Signale können auch vektorielle Signale sein, die ebenfalls die Richtung der Beschleunigung beinhalten.

### Bezugszeichenliste:

- 10: Hubladebühne
- 11: Fahrzeugaufbau
- 12: Ladeplattform
- 13: Hubwerk
- 14: Tragrohr
- 15: Druckmittelzylinder
- 16: Druckmittelzylinder
- 17: Bedienpult
- 18: Neigungssensor
- 19: Beschleunigungssensor
- 20: Boden
- 21: Nutzfläche
- 22: Unterseite
- 23: Querkante

## Patentansprüche

1. Verfahren zum Steuern einer eine Ladeplattform (12) aufweisenden Hubladebühne (10), wobei die Ladeplattform (12) sowohl verschwenkt als auch abgesenkt oder angehoben werden kann, und wobei der Schwenkwinkel der Ladeplattform (12) beim Bewegen derselben ermittelt wird, **dadurch gekennzeichnet, dass** zusätzlich zum Schwenkwinkel auch dynamische Werte beim Bewegen der Ladeplattform (12) ermittelt und für mindestens einen nachfolgenden Bewegungsablauf der Ladeplattform (12) herangezogen werden und anhand der ermittelten dynamischen Werte erfasst wird, wann die Ladeplattform (12) vollständig abgesenkt und/oder vollständig angehoben ist.

2. Verfahren nach Anspruch 1, **dadurch gekennzeichnet, dass** der Schwenkwinkel und/oder die dynamischen Werte abgespeichert werden, vorzugsweise fortlaufend.

3. Verfahren nach Anspruch 1 oder 2, **dadurch gekennzeichnet, dass** anhand der ermittelten dynamischen Werte mindestens erfasst wird, ob eine Senk- bzw. Hubbewegung der Ladeplattform beendet, gestartet und/oder unterbrochen wird.

4. Verfahren nach einem der vorhergehenden Ansprüche, **dadurch gekennzeichnet, dass** mindestens anhand solcher dynamischen Werte, die das vollständige Absenken der Ladeplattform (12) detektieren, eine Bodenangleichung der Ladeplattform (12) eingeleitet wird.

5. Verfahren nach einem der vorhergehenden Ansprüche, **dadurch gekennzeichnet, dass** als dynamische Werte mindestens Beschleunigungs- und/oder Verzögerungswerte der Ladeplattform (12), gegebenenfalls auch die Richtungen der Werte, ermittelt werden, vorzugsweise sensorisch.

6. Hubladebühne (10) für Fahrzeuge mit einer Ladeplattform (12), einem diese tragenden Hubwerk (13) zum Heben, Senken und/oder Verschwenken der Ladeplattform (12), mindestens einem Neigungssensor (18) zur Ermittlung der Neigung der Ladeplattform (12) und mindestens einem zusätzlich zum Neigungssensor (18) vorgesehenen Beschleunigungssensor (19) sowie gegebenenfalls einer Bedieneinheit, **dadurch gekennzeichnet, dass** der mindestens eine Beschleunigungssensor (19) der Ladeplattform (11) zugeordnet ist.

7. Hubladebühne (10) nach Anspruch 6, **dadurch gekennzeichnet, dass** der mindestens eine Beschleunigungssensor (19) und der Neigungssensor (18) zu einer Sensoreinheit zusammengefasst sind, wobei die Sensoreinheit vorzugsweise der Ladeplattform (12) zugeordnet ist.

8. Hubladebühne (10) nach Anspruch 6 oder 7, **dadurch gekennzeichnet, dass** der mindestens eine Beschleunigungssensor (19) und/oder der mindestens eine Neigungssensor (18) mit einer Auswerteinheit und/oder einer Steuerung verknüpft sind, wobei der Auswerteinheit bzw. der Steuerung vorzugsweise ein Speicher für die vom Beschleunigungssensor (19) bzw. Neigungssensor (18) erfassten Signale zugeordnet ist.

## Claims

1. Method for controlling a tail lift (10) having a loading platform (12), wherein the loading platform (12) can be both pivoted and lowered or raised, and wherein the pivot angle of the loading platform (12) is determined during the movement thereof, **characterized in that**, in addition to the pivot angle, dynamic values are also determined during the movement of the loading platform (12) and used for at least one subsequent movement sequence of the loading platform (12) and, on the basis of the determined dynamic values, it is detected when the loading platform (12) is completely lowered and/or completely raised.

2. Method according to Claim 1, **characterized in that** the pivot angle and/or the dynamic values is/are stored, preferably continuously.

3. Method according to Claim 1 or 2, **characterized in that**, on the basis of the determined dynamic values, it is at least detected whether a lowering or lifting movement of the loading platform is ended, started and/or interrupted.

4. Method according to one of the preceding claims, **characterized in that** a ground alignment of the loading platform (12) is initiated at least on the basis of those dynamic values which detect the complete lowering of the loading platform (12).

5. Method according to one of the preceding claims, **characterized in that** the dynamic values determined, preferably by means of sensors, are at least acceleration and/or deceleration values of the loading platform (12) and, where appropriate, also the directions of the values.

6. Tail lift (10) for vehicles with a loading platform (12), with a lifting mechanism (13) supporting the latter for lifting, lowering and/or pivoting the loading platform (12), with at least one inclination sensor (18) for determining the inclination of the loading platform (12), with at least one acceleration sensor (19) provided in addition to the inclination sensor (18), and, where appropriate, with an operating unit, **characterized in that** the at least one acceleration sensor (19) is assigned to the loading platform (11).

7. Tail lift (10) according to Claim 6, **characterized in that** the at least one acceleration sensor (19) and the inclination sensor (18) are combined to form a sensor unit, wherein the sensor unit is preferably assigned to the loading platform (12).

8. Tail lift (10) according to Claim 6 or 7, **characterized in that** the at least one acceleration sensor (19) and/or the at least one inclination sensor (18) are/is linked with an evaluation unit and/or a controller, wherein the evaluation unit and/or the controller are/is preferably assigned a memory for the signals detected by the acceleration sensor (19) and/or inclination sensor (18).

## Revendications

1. Procédé de commande d'un hayon élévateur (10) présentant une plate-forme de chargement (12), dans lequel la plate-forme de chargement (12) peut être aussi bien inclinée qu'abaissée ou relevée, et dans lequel on détermine l'angle d'inclinaison de la plate-forme de chargement (12) lors du mouvement de celle-ci, **caractérisé en ce qu'**en plus de l'angle d'inclinaison on détermine également des valeurs dynamiques lors du mouvement de la plate-forme de chargement (12) et on les utilise pour au moins une opération de mouvement ultérieur de la plate-forme de chargement (12) et on détecte à l'aide des valeurs dynamiques déterminées à quel moment la plate-forme de chargement (12) est entièrement abaissée et/ou entièrement relevée.

2. Procédé selon la revendication 1, **caractérisé en ce que** l'on mémorise, de préférence en continu, l'angle d'inclinaison et/ou les valeurs dynamiques.

3. Procédé selon une revendication 1 ou 2, **caractérisé en ce que** l'on détecte à l'aide des valeurs dynamiques déterminées au moins si un mouvement de descente ou de levage de la plate-forme de chargement se termine, commence et/ou est interrompu.

4. Procédé selon l'une quelconque des revendications précédentes, **caractérisé en ce que** l'on introduit un dépôt à même le sol de la plate-forme de chargement (12) au moins à l'aide de valeurs dynamiques, qui détectent la descente totale de la plate-forme de chargement (12).

5. Procédé selon l'une quelconque des revendications précédentes, **caractérisé en ce que** l'on détermine comme valeurs dynamiques, de préférence à l'aide de capteurs, au moins des valeurs d'accélération et/ou de ralentissement de la plate-forme de chargement (12), éventuellement aussi les directions des valeurs.

6. Hayon élévateur (10) pour des véhicules avec une plate-forme de chargement (12), un mécanisme de levage (13) portant celle-ci pour lever, abaisser et/ou incliner la plate-forme de chargement (12), au moins un détecteur d'inclinaison (18) pour la détermination de l'inclinaison de la plate-forme de chargement (12), et au moins un capteur d'accélération (19) prévu en plus du détecteur d'inclinaison (18), ainsi qu'éventuellement une unité de commande, **caractérisé en ce que** ledit au moins un capteur d'accélération (19) est associé à la plate-forme de chargement (11).

7. Hayon élévateur (10) selon la revendication 6, **caractérisé en ce que** ledit au moins un capteur d'accélération (19) et le détecteur d'inclinaison (18) sont rassemblés en une unité de capteurs, dans lequel l'unité de capteurs est de préférence associée à la plate-forme de chargement (12).

8. Hayon élévateur (10) selon une revendication 6 ou 7, **caractérisé en ce que** ledit au moins un capteur d'accélération (19) et/ou ledit au moins un détecteur d'inclinaison (18) sont reliés à une unité d'évaluation et/ou à une commande, dans lequel de préférence une mémoire pour les signaux détectés par le capteur d'accélération (19) ou le détecteur d'inclinaison (18) est associée à l'unité d'évaluation ou à la commande.
